# EUROPEAN PATENT SPECIFICATION

(11) **EP 1 108 890 B1**
(45) Date of publication and mention of the grant of the patent: **01.06.2005**
(21) Application number: 00500214.2
(22) Date of filing: 18.10.2000
(51) Int. Cl.: F03D 5/04, F03D 3/02, F03G 7/00, F03D 3/04, B60L 8/00, F03D 9/00, F03D 3/00

(54) **Aeolian energy generator for cars**
Windkraftanlage für Fahrzeuge
Eolienne pour voitures

(30) Priority: 14.12.1999 AR 9906348
(43) Date of publication of application: 20.06.2001
(73) Proprietor: Gericke De Vega, Dora Angelca, Buenos Aires (AR)
(72) Inventor: Gericke De Vega, Dora Angelca, Buenos Aires (AR)
(74) Representative: Diaz Nunez, Joaquin

(56) References cited:
- EP-A- 0 546 983
- DE-A- 3 226 381
- DE-A- 3 907 861
- PATENT ABSTRACTS OF JAPAN vol. 018, no. 613 (M-1709), 22 November 1994 (1994-11-22) & JP 06 237501 A (ITSUKIYUU KENCHIKUSHI JIMUSHO HAABAA HOUSE:KK), 23 August 1994 (1994-08-23)

## Description

The present invention relates mainly to an AEOLIAN ENERGY GENERATOR FOR CARS, which has been designed to use, first, the intensive air currents produced underneath such vehicles as they travel, increasing direct and proportionally to speed increments and resulting in a benefit useful for many applications, that is, to feed air conditioning equipment, to charge the battery of electricity storage batteries, to improve the performance of conventional dynamos or to replace them, etc.

More specifically, this patent of invention relates to a device of the kind detailed above, which falls into the kind of those constituted by one or more rotative and jointly involved bodies, of radial blades or vanes, exposed to air currents with the object of producing the rotation of the nucleus of a transformer of mechanic power into electric power, with the special detail that the air currents, specially used for that purpose, are those generated under the bodies of the cars, generally of an aerodynamic configuration, being the vehicles of back or front wheel drive.

It is well known the fact that it is absolutely necessary to have a minimum distance under the body of the car, in relation to the surface of the ground or the pavement, in order to comply with regulatory rules of the different countries, in order to avoid undesirable shocks with elements which may protrude from it. In the same way, as a consequence of the mentioned aerodynamic configuration, when the said vehicles push forward, they deviate the air from the atmosphere upwards, downwards and towards the sides. On the other hand, the bottom configuration of the mentioned car is usually unequal, including some elements which protrude longer than others, but always above the measure of the mentioned minimum distance, that is commonly correspondent to the differential gear, which is a mechanism located in a position lower than the axis, both the frontal and the back, irrespective of the fact of being vehicles of front or back wheel drive. One of the known embodiments is described in patent DE 3907861, filed in 1989. It belongs to the creations which incorporate wind pipes with installed blades or fans in which the eolic energy is used to action transformers that provide electric energy to the electricity storage battery of the vehicle.

This document also discloses the profit of the foul wind generated by the vehicle's moving speed.

It proposes as solution, the instalment of wind conducting pipes provided with fans which axis are at the base of the channel in a way that one half of the blade is below the channel and the other half is inside the channel.

The embodiment divulged in that patent shows some difficulties, such as not teaching clearly where is the pipe installed under the cowl.

It discloses the presence of a lower convexity where the fans are located, which represents a serious settling problem because of the need to maintain a minimum separation distance from the pavement.

The design of the shown pipe does not seem to be appropriated to capture the wind circulating under the vehicle's body because of the location of the blades and because of the mentioned convexity, which oblige to situate the wind pipe over the lower edge of the vehicle's body and, as a consequence, is not possible to profit the wind generated below the vehicle's body.

The divulged pipe is a quadrangular which height is almost equal to his width.

It is also know patent EP 0546983 filed on December 9 1991 which discloses a particular creation using fans to profit the eolic energy to action a transformer which provides electric energy to the storing battery of the vehicle.

A group of wind generators (z) are disposed in front of air takings located in different strategic points of the vehicle. It refers to turbines of variable geometry (A, B, C, D, E, F) which function profiting the vehicle's movement.

It is also known from patent DE 3226381 filed on July 15 1982 a very specific embodiment to profit the air current produced during the vehicle's movement. The fans (13) are interpolated in the air current and located laterally, in line with the vehicle's wheels (5). It is shown that the blades are projected downwards maintaining a distance from the pavement which is equivalent to the wheel's radio.

It is observed that in this case the profited air current is less than half the total air current circulating below the vehicle.

It is also mentioned patent JP A 06237501 filed on September 4 1992 which show a very particular distribution for air takings applied on the vehicle's body in a way that the eolic energy obtained is profited to action an alternator which feeds the electricity battery tied to an electric engine which moves the vehicle.

Apart from the considerations above mentioned, in the case of cars propelled by motors of internal combustion, either explosion or injection motors, electrical devices are used to start them, which consume electricity from the electricity storage batteries, being the mentioned electricity replaced during the operation of said motors, after a time which is proportional and direct to that spent during the starting of them. With this purpose, the motors are equipped with respective dynamos or alternator current generators joined by means of drives to the corresponding motors. The fact that said dynamos or alternators exceed in the mentioned charge of the storage battery is avoided with solenoid alternators.

Moreover, said generators of electricity (dynamos or alternators) refill the battery after the resulting consumption by sparks and heating necessary for the working of any motor, by switching the lights on, the sound of the horns, radio receptors, warming devices, lighters for cigarettes, etc.

The manufacture of cars with electrical propulsion is also known in the art, which instead of being feed by fuel, are feed by electric power which comes from special storage batteries which must be refilled or directly replaced after a certain amount of energy is delivered.

As a consequence, up to the moment, the consumption of electricity is practically universal, being the case of cars with internal combustion motors or electrical ones, enough reason by which the device of the present invention constitutes an efficient solution to increase the working life of the storage batteries employed while achieving high savings, which, taken to practice, will result in different improvements and variations of performance.

As a matter of fact this device comprises a new combination of means, which has a plurality of rotative bodies provided with radial blades or vanes, joined to a tangential axis, inserted transversally in a wide pipe, preferably flat-nosed, situated between the wheels of both sides of the car, and located longitudinally from the front towards the back, provided that the superior halves of the mentioned bodies and the halves of the vanes protrude above through a vertical window which, in the superior level contains the mentioned pipe, while said pipe has a end defining a wide opening for the entrance of air, completing the set with a dynamo or transformer of equivalent energy attached to the mentioned axis in such conditions than when the axis rotates due to the air currents produced by the speed under the car, the electric power is generated for those uses as detailed at the beginning of the present specification, because those currents push backwards the blades or vanes producing the rotation of all the rotative bodies in the same direction and simultaneously with the axis which holds them.

Obviously, this set must be preferably assembled with bolsters or bearings made of a material which lubricates by itself, such as Teflon or other similar plastic material, in order to counteract the effects of friction in the axis.

In relation to the blades or vanes of the rotative bodies, many variations are considered, as in the shapes of known turbines. It is important to point out that the curved vanes may conduct to better application of the air currents longitudinally located in relation to the pipes, because their shapes are similar to conical cavities which successively fill and empty in each round.

In order to make explicit the briefly explained advantages of the aeolian generator of the present invention, to which the users and those skilled in the art may add many more, as well as to make easier the understanding of its constructive, constitutive and working characteristics, it is hereinafter described a preferred non-limiting exemplary embodiment, illustrated by means of drawings and without a fixed scale in the attached picture.
Fig. 1 is a side view of the outline, and a partial view of the front part of a back wheel drive car, furnished with an aeolian generator according to the present invention.
Fig. 2 is a partial perspective view of an alternative embodiment.
Fig. 3 is a full perspective view of another embodiment of the invention.
Fig. 4 is another different version, in a reduced scale, which takes into account the fact that the provided car for the present device would be a front wheel drive vehicle.

In all the drawings, same reference numbers correspond to the same or equivalent constitutive parts or elements of the prototype chosen as an example for the present explanation of this aeolian generator, object of the present invention.

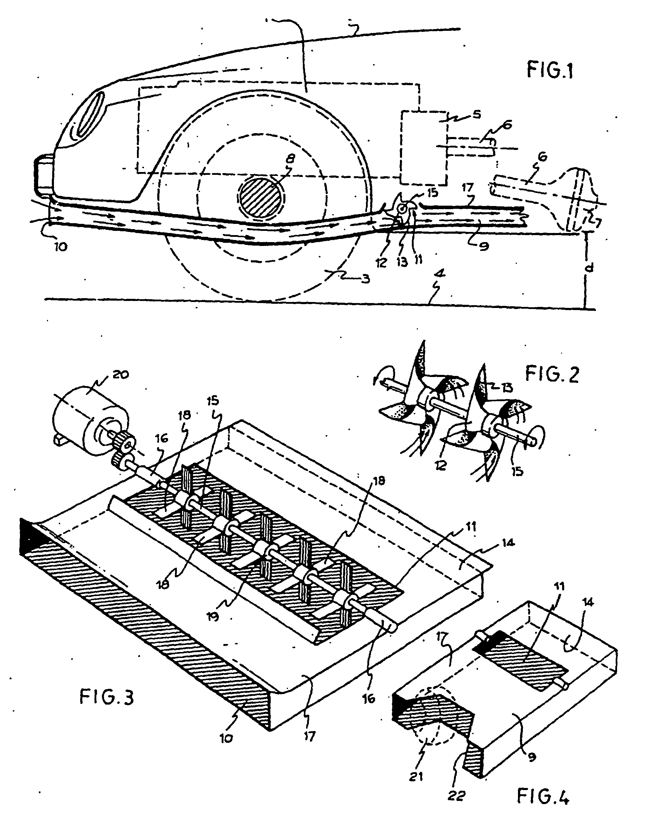

As it is possible to see in Fig. 1, the car partially illustrated therein is one of the type having a frontal motor -1- covered by a conventional hood -2- assembled on wheels -3- supported on a ground or pavement -4- ; being the mentioned motor attached to the gearbox -5- , from which the descendant Cardan joint extends -6- up to the differential gear -7- , in this case for back wheel drive, which is not shown.

Under the frontal axis -8- and between the two frontal wheels, a wide longitudinal pipe -9- extends backwards, which is provided of three openings equally indispensable for this special case, that is, the entrance of air, or frontal -10- , an intermediate superior window -11- through which half the height of the rotative bodies -12- appears with its blades or vanes -13- and, finally, a back opening -14-which can only be seen in Fig. 3 and 4, through which the air inside goes out without whirlwinds.

Among the elements described, with the exception of the wheel -3- , the one which has the least distance -d- in relation to the ground or pavement -4- is usually the differential gear -7- , back or front one.

The rotative bodies -12- provided with blades -13- will be constituted by small mills, where the mentioned blades are made of curved tin, with a shape similar to that mill made from millboard or similar. These mentioned blades reimburse the air which runs through the pipe at a different speed, depending on the quality of motion of the car, in such a way that push with power the axis -15- on which the mentioned small mills are assembled -13- as it is shown with details in Fig. n° 2. In order to use the air profitable, it is convenient that the small mills be near among them.

The assemble of the axis -15- will be preferably done by means of small cushions of Teflon -16- for friction damping, which will have their rotative axis substantially coplanar in relation to the superior face -17- of the mentioned flat nosed pipe -9-.

In the way described, all the circulating air due to the speed of the car, by the inner part of the mentioned pipe -9- will push the blades to practice an action which power will be multiplied by the amount of rotative bodies -12-, which would be an important amount at high speed.

In Fig. n° 3 there appears a representation as a non foreseen variant, among others which have not influence in the novelty of the present invention, in which the vanes are radial blades -18- joined to a cylindrical nucleus -19- assembled on the mentioned axis -15- coaxially. The mentioned blades and half of the nucleus are those outstanding upwards from the window -11- over the superior view -17- of the pipe -9-.

In one or another of the axis ends -15- and outside the pipe -9- it is provided the location of a dynamo -20- or any other mechanism known by everyone, capable to transform the mechanic power produced by the rotation of the mentioned axis - 15- into an electric one. , stating clear that the kind of element referred to -20- has no influence in the novelty of the present invention, due to it is a device known to be used for such purposes.

In Fig. 4 shows another different version, with a more reduced scale, which corresponds to those cases of front wheel cars, and, in this way, they have the differential gear in the front axis. That is why it is remarked as -21- the respective mechanism of transmission usually with side gear wheels and with -22- a corresponding neck in the front opening of the pipe -9- which influences the superior view -17- as well as the inferior one, which has no reference, giving space for the mentioned differential gear -21-.

## Claims

1. AEOLIAN ENERGY GENERATOR FOR CARS of the type made up of rotating joined nuclei of radial palettes or blades, such as helixes, interpolated in currents of air in order to rotate the nucleus of a transformer of mechanical energy to electrical energy, to feed the electricity storage battery of the vehicle, said currents of air being generated by the vehicle's moving speed and being directed to the rotative nucleus by means of an air circulation conduct, **characterized in that** the circulation conduct or pipe (9) specially designed to use the air current produced below the automobile during the motion, is a pipe which height is substantially smaller than its width and its longitude, said pipe being located between the two front wheels (3) of the vehicle, below the front axis (8) , said pipe having an open frontal face located below the vehicle's frontal fender to allow the air current entrance (10) , an open rear face (14) for air exit and a horizontal transversal opening (11) located in the middle portion of the pipe's superior face (17) , where the rotative nucleus appear partially trough the transversal opening and said rotative nucleus are mounted in a transversal axis (15) which is coplanar to the mentioned superior face

2. AEOLIAN ENERGY GENERATOR FOR CARS as claimed in 1, **characterized in that** the radial blades or fanes (13) joined to the rotative nucleus (12) are a plurality of curved metal mills disposed one after the other, very near one to the other, all of them mounted in the coplanar to the superior face axis (15) which excels laterally a short portion to vinculate with the energy transformer (20).

3. AEOLIAN ENERGY GENERATOR FOR CARS as claimed in 1, **characterized in that** the distance between the air circulation conduct or pipe (9) and the pavement is minor than the radio of the car's wheel (3) with its pneumatic tire .

4. AEOLIAN ENERGY GENERATOR FOR CARS as claimed in 1 **characterized in that** the blades are radial palettes (18) joined to a cylindrical nucleus (19) mounted coaxially in a transversal axis (15) where each of the palettes or blades and half of the nucleus appear upwards from the superior face (17) of the conduct or pipe (9).

## Patentansprüche

1. WINDBETRIEBENER GENERATOR FÜR FAHRZEUGE hergestellt aus drehbar verbundenen Kernstücken von radialen Schaufeln oder Flügeln, so wie Propeller, angeordnet inmitten von Luftströmungen zu dem Zwecke das Kernstück eines Transformator von mechanischer Kraft in Elektroenergie zur Versorgung des Speicherakkumulators für Elektroenergie eines Fahrzeugs, wobei besagte Luftströmungen durch die Fahrgeschwindigkeit des Fahrzeugs entstehen und zu dem drehbaren Kernstück mittels eines Luftströmungsrohres geführt werden, **dadurch gekennzeichnet dass** der Luftströmungsgang oder das Luftströmungsrohr (9), das besonders zur Nutzung der während der Fortbewegung unter dem Fahrzeug entstehenden Luftströmung konzipiert ist, ein Rohr mit einer wesentlich geringeren Höhe als Breite ist, wobei sich dieses Rohr zwischen den zwei Vorderrädern (3) des Fahrzeugs unter der Vorderachse (8) befindet, wobei dieses Rohr eine offene Vorderseite aufweist, die sich unter der vorderen Stoßstange des Fahrzeugs befindet, um den Eintritt der Luftströmung (10) zu erlauben; ein offenes hinteres Ende (14) für den Luftaustritt und eine horizontale transversale Öffnung (11) im mittleren Teil der Oberseite (17) des Rohres, aus dem die drehbaren Kernstücke teilweise hervorragen und wobei besagte drehbare Kernstücke auf einer transversalen Achse (15) montiert sind, die koplanar zu genannter Oberseite ist.

2. WINDBETRIEBENER GENERATOR FÜR FAHRZEUGE wie unter 1 beansprucht, **dadurch gekennzeichnet dass** die radialen mit dem drehbaren Kernstück (12) verbundenen Schaufeln oder Ventilatoren (13) eine Vielzahl von gebogenen metallenen Mühlen sind, welche sehr nahe beieinander aufeinanderfolgend alle auf eine Achse (15) montiert sind, welche koplanar zur Oberseite ist und seitlich etwas hervorragt, um mit dem Energietransformator (20) in Verbindung zu treten.

3. WINDBETRIEBENER GENERATOR FÜR FAHRZEUGE wie unter 1 beansprucht, **dadurch gekennzeichnet dass** die entfernung zwischen dem Luftströmungsgang oder -rohr (9) und dem Asphalt geringer ist als der Radius der Fahrzeugräder (3) mit ihren Luftreifen.

4. WINDBETRIEBENER GENERATOR FÜR FAHRZEUGE wie unter 1 beansprucht, **dadurch gekennzeichnet dass** die Flügel radiale mit einem zylindrischen Kernstück (19) verbundene Schaufeln (18) sind, die koaxial auf einer transversalen Achse (15) montiert werden, so dass jede der Flügel oder Schaufeln und die Hälfte der Kernstücke über die Oberseite (17) des Ganges oder Rohres (9) hervorragt.

## Revendications

1. LE GENERATEUR D'ENERGIE EOLIQUE POUR LES AUTOMOBILES du genre fabriqués avec des noeuds de palettes ou des ailes radiales, telles que les hélices, interpolées en courants d'air pour faire tourner le noeud d'un transformateur d'énergie mécanique vers l'énergie électrique, pour alimenter la batterie de stockage électrique du véhicule. Ces courants d'air qui sont provoqués par la vitesse du mouvement véhiculaire et qui sont dirigés au noeud rotatif au moyen d'un tube destiné à la circulation de l'air, **caractérisé par le fait que** le tuyau ou tube de circulation (9), lequel á été spécialement dessiné pour utiliser le courant d'air qui se produit sous l'automobile, pendant le mouvement, c'est un tube dont la hauteur est assez inférieure en largueur et en longueur, et il se trouve entre les deux roues avants (3) du véhicule, sous l'axe avant (8). Ce tube a un côté ouvert, situé sous le garde-boue avant du véhicule en vu de permettre l'entrée du courant d'air (10), un côté arrière ouvert (14) pour la sortie de l'air et une ouverture transversale horizontale (11) placée dans la partie du milieu du côté supérieur du tube (17) où le noeud rotatif apparaît partiellement par l'ouverture transversale. Ces noeuds sont montés sur un axe transversal (1%0 lequel consiste à accoupler au côté supérieur mentionné.

2. LE GENERATEUR D'ENERGIE EOLIQUE POUR LES AUTOMOBILES, d'après ce qu'on a dit au point 1), **caractérisé par le fait que** : les palettes ou les ailes radiales (13) reliées au noeud rotatif (12) constituent une pluralité des fraises métalliques courbées, disposées l'une après l'autre et, dont la plupart sont montées dans le couplage de l'axe supérieur (13) qui dépasse latéralement une petite partie pour se connecter avec le transformateur énergétique (20).

3. LE GENERATEUR D'ENERGIE EOLIQUE POUR LES AUTOMOBILES, d'après ce qu'on a dit au point 1), **caractérisé par le fait que** : la distance comprise entre le tuyau ou tube de circulation de l'air (9) et le pavée résulte inférieure que le radio de l'automobile (3) avec le pneu.

4. LE GENERATEUR D'ENERGIE EOLIQUE POUR LES AUTOMOBILES, d'après ce qu'on a dit au point 1), **caractérisé par le fait que** : les ailes sont des palettes radiales (18) reliées à un noeud cylindrique (19) montées axialement sur un axe transversal (15) où chacune des palettes ou des ailes et la moitié du noeud mentionné apparaissent dans un ordre ascendant dès côté supérieur (17) du tuyau ou tube (9)
